# EUROPÄISCHE PATENTSCHRIFT

(11) **EP 3 344 093 B1**
(45) Veröffentlichungstag und Bekanntmachung des Hinweises auf die Patenterteilung: **27.03.2019**
(21) Anmeldenummer: 16765907.7
(22) Anmeldetag: 13.07.2016
(51) Int. Cl.: A47B 88/493

(54) **VOLLAUSZUGSFÜHRUNG FÜR MÖBELTEILE**
FULL PULL-OUT GUIDE FOR FURNITURE PARTS
GLISSIÈRE D'EXTRACTION COMPLÈTE POUR DES ÉLÉMENTS DE MEUBLE

(30) Priorität: 03.09.2015 DE 202015104668 U
(43) Veröffentlichungstag der Anmeldung: 11.07.2018
(73) Patentinhaber: REME-Möbelbeschläge GmbH, 33161 Hövelhof (DE)
(72) Erfinder: MEIER, Bruno, 33161 Hövelhof (DE)
(74) Vertreter: Ostermann, Thomas
(86) Internationale Anmeldenummer: PCT/DE2016/100310
(87) Internationale Veröffentlichungsnummer: WO 2017/036440

(56) Entgegenhaltungen:
- CN-Y- 200 994 581
- CN-Y- 201 127 426

## Beschreibung

Die Erfindung betrifft eine Vollauszugsführung für Möbelteile.

Aus der EP 0 958 761 B1 ist eine Vollauszugsführung für Möbelteile bekannt, die eine an einem ortsfesten Möbelteil festlegbare Korpusschiene, eine an einem bewegbaren Möbelteil festlegbare Laufschiene sowie eine zwischen der Korpusschiene und der Laufschiene angeordnete Mittelschiene aufweist. Als kraftübertragende Elemente sind gleich große kugelförmige Wälzkörper vorgesehen, die zwischen der Korpusschiene und der Mittelschiene einerseits und der Mittelschiene und der Laufschiene andererseits in gleicher Größe angeordnet sind. Die bekannte Vollauszugsführung weist eine relativ große Bauhöhe auf, da die Laufschiene im Wesentlichen oberhalb der Korpusschiene angeordnet ist. Die kugelförmigen Wälzkörper erstrecken sich in zwei vertikalen Ebenen.

Eine weitere Vollauszugsführung ist aus der DE 10 2010 036 431 A1 bekannt. Die Vollauszugsführung weist eine im Querschnitt Doppel-T-förmige Mittelschiene auf, an deren gegenüberliegenden Endbereichen eine Laufschiene und eine Korpusschiene angeordnet sind. Diese Vollauszugsführung weist deshalb eine relativ große Bauhöhe auf.

Aus der DE 10 2013 111 076 A1 ist eine Vollauszugsführung für Möbelteile bekannt, die eine Korpusschiene, eine im Querschnitt C-förmige Mittelschiene und eine im Querschnitt C-förmige Laufschiene aufweist. Als kraftübertragende Elemente sind in einer inneren Laufbahn, die sich in Erstreckungsrichtung der Vollauszugsführung zwischen der Korpusschiene und der Mittelschiene erstreckt, und in einer äußeren Laufbahn, die sich in Erstreckungsrichtung der zwischen der Mittelschiene und der Laufschiene erstreckt, um eine einzige Achse drehbare Wälzkörper vorgesehen. Diese Wälzkörper können als zylinderförmige oder tonnenförmige Wälzkörper ausgebildet sein, die in jedem Fall entlang einer Linie an den entsprechenden Schienen zur Anlage kommen. Durch die gewählte Ausführung der Wälzkörper kann insbesondere die mechanische Beanspruchung der Vollauszugsführung erhöht werden. Allerdings bewirken diese einen gleichen Durchmesser aufweisenden Wälzkörper aufgrund ihrer Anordnung zwischen den Schienen einen relativ großen Aufbau der Vollauszugsführung.

Aus der CN 200 994 581 Y ist eine Vollauszugsführung bekannt, bei der kraftübertragende Elemente in einer L-förmigen Auszugsführung angeordnet sind. Eine symmetrische Anordnung der kraftübertragenden Elemente bezüglich einer Mittelebene ist somit nicht vorgesehen.

Aus der CN 201 127 426 Y ist eine Vollauszugsführung für Möbelteile mit einer Korpusschiene, einer Laufschiene und einer Mittelschiene bekannt. Zwischen der Korpusschiene und der Mittelschiene einerseits und der Mittelschiene und der Laufschiene andererseits sind kraftübertragende Elemente, nämlich kugelförmige Wälzkörper angeordnet. Bezüglich einer vertikalen Mittelebene der Vollauszugsführung sind vier Wälzkörper symmetrisch angeordnet; und zwar befindet sich ein Wälzkörper in einer vertikalen Mittelebene, die zwischen einer ersten vertikalen Mittelebene, in der zwei Wälzkörper angeordnet sind, und einer weiteren Mittelebene, in der ein einziger Wälzkörper angeordnet ist.

Aufgabe der vorliegenden Erfindung ist es daher, eine Vollauszugsführung derart weiterzubilden, dass auf einfache Weise eine mechanische Stabilität bei geringer Bauhöhe gewährleistet ist.

Zur Lösung dieser Aufgabe weist die Erfindung die Merkmale des Patentanspruchs 1 auf.

Nach der Erfindung liegen an zwei Schienen, nämlich an einer Laufschiene und an einer Mittelschiene, eine Mehrzahl von kraftübertragenden Elementen an, wobei ein auf einer Seite einer vertikalen Mittelebene des Vollauszugsführung angeordnetes äußeres erstes kraftübertragendes Element, das sich in einer durch die Mittelschiene und durch eine Korpusschiene begrenzten inneren Laufbahn erstreckt, mit einer vertikalen Mittelebene derselben zwischen vertikalen Mittelebenen anderer kraftübertragenden Elementen angeordnet ist, wobei die anderen kraftübertragenden Elemente zum einen in der inneren Laufbahn und zum anderen in einer durch die Laufschiene und die Mittelschiene begrenzten äußeren Laufbahn begrenzt angeordnet sind. Durch den Horizontalversatz des äußeren ersten kraftübertragenden Elementes kann insbesondere die Bauhöhe der Vollauszugsrichtung reduziert werden. Darüber hinaus ermöglicht der Horizontalversatz des äußeren ersten kraftübertragenden Elementes zu anderen kraftübertragenden Elementen, dass die Kontaktfläche zu den Schienen in unterschiedlichen vertikalen Ebenen besteht. Nach der Erfindung sind die kraftübertragenden Elemente so außermittig angeordnet, dass sie nicht die vertikale Mittelebene der Vollauszugsführung schneiden. Die kraftübertragenden Elemente sind vorzugsweise in mehr als zwei vertikalen Ebenen pro Seite der Vollauszugsführung angeordnet, so dass eine in Umfangsrichtung der Vollauszugsführung homogene Krafteinleitung gewährleistet ist.

Nach einer bevorzugten Ausführungsform der Erfindung sind die in der inneren Laufbahn angeordneten ersten kraftübertragenden Elemente und die in der zweiten Laufbahn angeordneten zweiten kraftübertragenden Elemente paarweise angeordnet, wobei die kraftübertragenden Elemente jeden Paares symmetrisch zu der vertikalen Mittelachse der Vollauszugsführung angeordnet sind. Somit ist eine symmetrische Kraftleinleitung von der Laufschiene in Richtung der Korpusschiene gewährleistet.

Nach einer Weiterbildung der Erfindung ist das äußere erste kraftübertragende Element in einem seitlich auskragenden Bereich der ersten Laufbahn bzw. der Mittelschiene angeordnet. Vorzugsweise reicht die Mittelschiene in diesem seitlich auskragenden Bereich bis zu einer vertikalen Mittelebene eines äußeren zweiten kraftübertragenden Elementes, das sich in der äußeren Laufbahn erstreckt. Vorteilhaft kann hierdurch der Abstand zwischen der Mittelschiene und der Korpusschiene wesentlich reduziert werden. Die äußeren ersten kraftübertragenden Elemente können sowohl eine vertikale Krafteinleitung wie auch eine seitliche Krafteinleitung aufnehmen. Zur Unterstützung der vertikalen Kraftaufnahme sind vorzugsweise die inneren zweiten kraftübertragenden Elemente vorgesehen, die sich im Vergleich zu dem äußeren ersten kraftübertragenden Element weiter zur vertikalen Mittelachse der Vollauszugsführung hin orientiert angeordnet sind.

Nach einer Weiterbildung der Erfindung sind die Korpus-, Mittel- und Laufschiene derart profiliert ausgebildet, dass zumindest bezogen auf eine Seite der Vollauszugsführung die in der inneren Laufbahn angeordneten ersten kraftübertragenden Elemente und in der äußeren Laufbahn angeordneten zweiten kraftübertragenden Elemente in Umfangsrichtung der Vollauszugsführung alternierend angeordnet sind. Auf diese Weise verläuft zumindest die Mittelschiene in Umfangsrichtung wellenförmig mit nacheinander in Umfangsrichtung auf verschiedene Seiten angeordneten Einbuchtungen, in denen die kraftübertragenden Elemente angeordnet sind. Vorteilhaft führt dies zu einer gleichmäßigen Verteilung von kraftübertragenden Elementen in Umfangsrichtung. Vorteilhaft weist die Vollauszugsführung hierdurch einen kompakten Aufbau auf.

Nach einer Weiterbildung der Erfindung sind die in der inneren Laufbahn und in der äußeren Laufbahn angeordneten kraftübertragenden Elemente in unterschiedlicher vertikaler Ebene und/oder in unterschiedlicher horizontaler Ebene zueinander angeordnet. Auf diese Weise ist eine verbesserte gleichmäßige Verteilung der kraftübertragenden Elemente in Umfangsrichtung gewährleistet.

Nach einer Weiterbildung der Erfindung ist die Mittelschiene und/oder die Korpusschiene derart profiliert ausgebildet, dass eine horizontale Mittelebene des äußeren ersten kraftübertragenden Elementes vertikal nach unten versetzt zu einer Oberseite der Korpusschiene angeordnet ist, so dass ein minimaler vertikaler Abstand zwischen der Korpusschiene und der Mittelschiene kleiner als 1,5 mm ist. Durch diese seitliche Außenverlagerung des äußeren ersten kraftübertragenden Elementes kann der vertikale Abstand wesentlich reduziert werden.

Nach einer Weiterbildung der Erfindung ist das äußere erste kraftübertragende Element größer ausgebildet als die anderen ersten kraftübertragenden Elemente und zweiten kraftübertragenden Elemente. Vorteilhaft kann hierdurch die Kraftaufnahme, insbesondere die vertikale Kraftaufnahme zwischen der Mittelschiene und der Korpusschiene, erhöht werden.

Nach einer Weiterbildung der Erfindung sind die kraftübertragenden Elemente als kugelförmige Wälzkörper ausgebildet. Zwar bilden die kugelförmigen Wälzkörper lediglich eine punktförmige Kontaktfläche zu der Oberfläche der Schienen. Durch die Beweglichkeit der kugelförmigen Wälzkörper in Umfangsrichtung der Vollauszugsführung können vorhandene Maßtoleranzen zwischen den Schienen ausgeglichen werden.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigt:
- Figur: einen vertikalen Querschnitt durch eine Vollauszugsführung.

Eine erfindungsgemäße Vollauszugsführung für Möbelteile wird vorzugsweise für Schubkästen als bewegbare Möbelteile eingesetzt, so dass der Schubkasten in horizontaler Laufrichtung relativ zu einem ortsfesten Möbelteil bewegbar bzw. verschiebbar ist. Als ortsfestes Möbelteil dient beispielsweise ein Möbelkorpus, der in einem Kleiderschrank integriert ist. Der Möbelkorpus kann auch durch einen Container oder eine Kommode oder dergleichen gebildet sein.

Die Vollauszugsführung weist im Wesentlichen eine Korpusschiene 1 auf, die über einen freien Schenkelabschnitt 2 mit dem ortsfesten Möbelteil fest verbunden ist. Ferner weist die Vollauszugsführung vorzugsweise eine im Querschnitt C-förmige Mittelschiene 3 sowie eine im Querschnitt C-förmige Laufschiene 4 auf. Die Laufschiene 4 ist mit dem nicht dargestellten bewegbaren Möbelteil, beispielsweise mit dem Schubkasten, fest verbunden. Die Mittelschiene 3 ist zwischen der Korpusschiene 1 und der Laufschiene 4 angeordnet. Öffnungen der Mittelschiene 3 und der Laufschiene 4 sind auf einer unteren Seite derselben angeordnet.

Die Korpusschiene 1, die Mittelschiene 3 und die Laufschiene 4 sind profiliert ausgebildet, wobei insbesondere die Korpusschiene 1 und die Mittelschiene 3 Einbuchtungen 5 bzw. 6 zur Aufnahme von als kugelförmige Wälzkörper ausgebildete erste kraftübertragenden Elemente 7 und zweite kraftübertragende Elemente 8 aufweisen. Die ersten kraftübertragenden Elemente (im Weiteren erste Wälzkörper 7 genannt) sind in einer inneren Laufbahn 9 angeordnet, die durch die Korpusschiene 1 und die Mittelschiene 3 begrenzt ist. Die zweiten kraftübertragenden Elemente (im Weiteren zweite Wälzkörper 8 genannt) sind in einer äußeren Laufbahn 10 angeordnet, die durch die Mittelschiene 3 und die Laufschiene 4 begrenzt ist. Auf diese Weise ist eine Verfahrbarkeit der Laufschiene 4 relativ zu der Mittelschiene 3 und der Korpusschiene 1 einerseits und der Mittelschiene 3 relativ zu der Korpusschiene 1 und der Laufschiene 4 andererseits gewährleistet. Die innere Laufbahn 9 und die äußere Laufbahn 10 erstrecken sich in Auszugsrichtung bzw. Laufrichtung der Schienen 1, 3 und 4.

Die ersten Wälzkörper 7 und die zweiten Wälzkörper 8 sind jeweils paarweise angeordnet, wobei die Wälzkörper 7, 8 eines jeden Paares von Wälzkörpern 7, 8 symmetrisch zu einer vertikalen Mittelebene M der Vollauszugsführung verläuft. Die Mittelschiene 3 und die Laufschiene 4 verlaufen symmetrisch zu der vertikalen Mittelebene M der Vollauszugsführung. Die Korpusschiene 1 ist als ein Hohlprofil ausgebildet und verläuft vorzugsweise bis zu der unteren Seite der Vollauszugsführung ebenfalls symmetrisch zu der vertikalen Mittelebene M. Die Vollauszugsführung ist somit symmetrisch zu der vertikalen Mittelebene M ausgebildet.

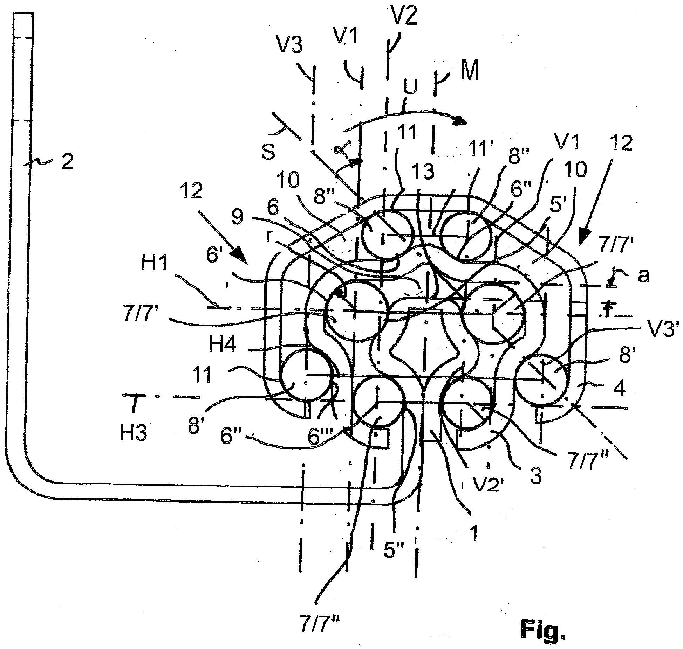

Die in der inneren Laufbahn 9 angeordneten ersten Wälzkörper 7 werden durch ein Paar von äußeren ersten Wälzkörpern 7' und ein Paar von inneren ersten Wälzkörpern 7" gebildet, die horizontal und vertikal versetzt zueinander angeordnet sind. Das Paar von äußeren ersten Wälzkörpern 7' ist in einer oberen Einbuchtung 5' der Korpusschiene 1 und in einer oberen Einbuchtung 6' der Mittelschiene 3 gelagert. Der innere erste Wälzkörper 7" ist in einer unteren Einbuchtung 5" der Korpusschiene 1 und in einer unteren Einbuchtung 6" der Mittelschiene 3 gelagert. Da die Bauteile der Vollauszugsführung symmetrisch zu der vertikalen Mittelebene M derselben angeordnet sind, sind in der Figur der Einfachheit halber nur die Bezugsziffern auf der linken Seite der Vollauszugsführung eingezeichnet.

In der äußeren Laufbahn 10 ist ein Paar von äußeren zweiten Wälzkörpern 8' und ein Paar von inneren zweiten Wälzkörpern 8" angeordnet. Die zweiten Wälzkörper 8' und 8" der Wälzkörperpaare sind sowohl horizontal als auch vertikal versetzt zueinander angeordnet. Die inneren zweiten Wälzkörper 8" sind in einer Einbuchtung 6 der Mittelschiene 3 und in einer Einbuchtung 11' der Laufschiene 4 gelagert. Der äußere zweite Wälzkörper 8' ist in einer Einbuchtung 6"' der Mittelschiene und einer Einbuchtung 11" der Laufschiene 4 gelagert.

Da die Vollauszugsführung symmetrisch zu der vertikalen Mittelebene M ausgebildet ist, gilt das im Folgenden Gesagte sowohl für die Bauteile, die auf der einen Seite der vertikalen Mittelebene M angeordnet sind als auch für die Bauteile, die auf einer gegenüberliegenden Seite der vertikalen Mittelebene M angeordnet sind. Der äußere erste Wälzkörper 7' weist eine vertikale Mittelebene V1 bzw. V1' auf, die zwischen einer vertikalen Mittelebene V2, V2' des inneren ersten Wälzkörpers 7" und dem inneren zweiten Wälzkörper 8" einerseits und einer vertikalen Mittelebene V3, V3' des äußeren zweiten Wälzkörpers 8' andererseits angeordnet ist. Eine horizontale Mittelebene H1 des äußeren ersten Wälzkörpers 7' verläuft versetzt zu horizontalen Mittelebenen H3 des Paares von inneren ersten Wälzkörpern 7" und einer horizontalen Mittelebene H4 eines Paares von äußeren zweiten Wälzkörpern 8'.

Sowohl in der inneren Laufbahn 9 als auch in der äußeren Laufbahn 10 sind jeweils zwei Paare von Wälzkörpern 7', 7", 8', 8" angeordnet. Innere erste Wälzkörper 7" und innere zweite Wälzkörper 8" sind der vertikalen Mittelebene M zugewandt angeordnet. Äußere erste Wälzkörper 7' und äußere zweite Wälzkörper 8' sind der vertikalen Mittelebene M abgewandt bzw. einem seitlichen Abschluss 12 der Vollauszugsführung zugewandt angeordnet.

Die Einbuchtung 6' der Mittelschiene 3 bildet einen seitlich auskragenden Bereich der inneren Laufbahn 9. Die Mittelschiene 3 erstreckt sich in diesem seitlich auskragenden Bereich seitlich nach außen bis hin zu der vertikalen Mittelebene V3, V3' des äußeren zweiten Wälzkörpers 8'.

Insbesondere ist die Mittelschiene 3 in einer Umfangsrichtung U derselben wellenförmig ausgebildet, wobei die Einbuchtungen 6, 6', 6", 6"' auf beiden Seiten der Mittelschiene 3 zur Aufnahme der Wälzkörper 7', 7", 8', 8" dienen. Die Wälzkörper 7', 7", 8', 8" können somit in Umfangsrichtung U der Vollauszugsführung alternierend in der inneren Laufbahn 8 und der äußeren Laufbahn 10 angeordnet sein. Diese alternierende Anordnung trifft im vorliegenden Ausführungsbeispiel jeweils zu beiden Seiten der vertikalen Mittelebene M zu.

Würde das Paar von inneren zweiten Wälzkörpern 8" durch einen auf der vertikalen Mittelebene M angeordneten Wälzkörper ersetzt sein, bzw. die Profilierung der Mittelschiene 3 und der Laufschiene 4 entsprechend angepasst sein, würde eine alternierende Anordnung der Wälzkörper nicht nur in halber Umfangsrichtung U, sondern in ganzer Umfangsrichtung U von einem Schenkelende der Mittelschiene 3 zu einem anderen Schenkelende derselben reichen.

Der äußere erste Wälzkörper 7' ist größer dimensioniert ausgebildet als die anderen Wälzkörper 7", 8'. 8". Die horizontale Mittelebene H1 dieses Wälzkörpers verläuft unterhalb einer Oberseite 13 der Korpusschiene 1. Somit kann ein minimaler vertikaler Abstand a zwischen der Oberseite 13 der Korpusschiene 1 und der Mittelschiene 3 kleiner als 1,5 mm betragen. Vorzugsweise liegt der minimale vertikale Abstand a in einem Bereich zwischen 0,8 mm und 1,3 mm. Im vorliegenden Ausführungsbeispiel ist der vertikale minimale Abstand a kleiner als ein Radius r des äußeren ersten Wälzkörpers 7'.

Eine Verbindungslinie S zwischen dem äußeren ersten Wälzkörper 7' und dem äußeren zweiten Wälzkörper 8' und dem inneren zweiten Wälzkörper 8" verläuft in einem spitzen Winkel α zu der vertikalen Mittelebene M. Im vorliegenden Ausführungsbeispiel ist der eingeschlossene Winkel α als spitzer Winkel ausgebildet.

Die Korpusschiene 1, die Mitteschiene 3 und die Laufschiene 4 sind als Profile ausgebildet, die aus einem umgeformten Blechmaterial bestehen.

Die ersten Wälzkörper 7, 7', 7" und die zweiten Wälzkörper 8, 8'. 8" schneiden nicht die vertikale Mittelebene M der Vollauszugsführung.

Es versteht sich, dass die beschriebene Ausführungsform nicht als abschließende Aufzählung der Erfindung zu verstehen ist, sondern lediglich beispielhaften Charakter für die Schilderung der Erfindung darstellt.

## Patentansprüche

1. Vollauszugsführung für Möbelteile, insbesondere für Schubkästen,
- mit einer an einem ortsfesten Möbelteil festlegbaren Korpusschiene (1),
- mit einer an einem bewegbaren Möbelteil festlegbaren Laufschiene (4),
- mit einer Mittelschiene (3),
- mit einer zwischen der Korpusschiene (1) und der Mittelschiene (3) angeordneten inneren Laufbahn (9), auf der eine Anzahl von ersten kraftübertragenden Elementen (7, 7', 7") bewegbar angeordnet ist,
- mit einer zwischen der Mittelschiene (3) und der Laufschiene (4) angeordneten äußeren Laufbahn (10), auf der eine Anzahl von zweiten kraftübertragenden Elementen (8, 8', 8") bewegbar angeordnet sind, dass auf mindestens einer Seite einer vertikalen Mittelebene (M) der Vollauszugsführung ein äußeres erstes kraftübertragendes Element (7') in einer vertikalen Mittelebene (V1, V1') angeordnet ist, die zwischen einer vertikalen Mittelebene (V2, V2') eines inneren ersten kraftübertragenden Elementes (7"), das auf derselben Seite der vertikalen Mittelebene (M) angeordnet ist wie das äußere erste kraftübertragende Element (7') und/oder eines inneren zweiten kraftübertragenden Elementes (8"), das auf derselben Seite der vertikalen Mittelebene (M) angeordnet istwie das äußere erste kraftübertragende Element (7'), einerseits und einer vertikalen Mittelebene (V3, V3') eines äußeren zweiten kraftübertragenden Elementes (8'), das auf derselben Seite der vertikalen Mittelebene (M) angeordnet ist wie das äußere erste kraftübertragende Element (7'), andererseits verläuft, und dass die ersten kraftübertragenden Elemente (7, 7', 7") und die zweiten kraftübertragenden Elemente (8, 8'. 8") nicht die vertikale Mittelebene (M) der Vollauszugsführung schneiden.

2. Vollauszugsführung nach Anspruch 1, **dadurch gekennzeichnet, dass** die ersten kraftübertragenden Elemente (7, 7', 7") und die zweiten kraftübertragenden Elemente (8, 8', 8") paarweise angeordnet sind, wobei die ersten kraftübertragenden Elemente (7, 7', 7") und die zweiten kraftübertragenden Elemente (8, 8'. 8") der Paare symmetrisch zu der vertikalen Mittelebene (M) der Vollauszugsführung angeordnet sind.

3. Vollauszugsführung nach Anspruch 1 oder 2, **dadurch gekennzeichnet, dass** das äußere erste kraftübertragende Element (7') in einem seitlich auskragenden Bereich der inneren Laufbahn (9) angeordnet ist.

4. Vollauszugführung nach einem der Ansprüche 1 bis 3, **dadurch gekennzeichnet, dass** die Korpusschiene (1), die Mittelschiene (3) und die Laufschiene (4) derart profiliert sind, dass die den jeweiligen Seiten bezüglich der vertikalen Mittelebene (M) der Vollauszugsführung angeordneten ersten kraftübertragenden Elemente (7, 7', 7") und zweiten kraftübertragenden Elemente (8, 8', 8") in Umfangsrichtung (U) der Vollauszugsführung alternierend in der inneren Laufbahn (9) und der äußeren Laufbahn (10) angeordnet sind.

5. Vollauszugsführung nach einem der Ansprüche 1 bis 4, **dadurch gekennzeichnet, dass** die in der inneren Laufbahn (9) angeordneten ersten kraftübertragenden Elemente (7, 7', 7") und die in der äußeren Laufbahn (10) angeordneten zweiten kraftübertragenden Elemente (8, 8', 8") jeweils in einer unterschiedlichen vertikalen Ebene (V1, V1', V2, V2', V3, V3') und/oder horizontalen Ebene (H1, H2, H3, H4) zueinander angeordnet sind.

6. Vollauszugsführung nach einem der Ansprüche 1 bis 5, **dadurch gekennzeichnet, dass** eine horizontale Mittelebene (H1) der äußeren ersten kraftübertragenden Elemente (7') vertikal nach unten so versetzt zu einer Oberseite (13) der Korpusschiene (1) angeordnet ist, dass ein minimaler vertikaler Abstand (a) zwischen der Korpusschiene (1) und der Mittelschiene (3) kleiner als 1,5 mm ist.

7. Vollauszugsführung nach einem der Ansprüche 1 bis 6, **dadurch gekennzeichnet, dass** das äußere erste kraftübertragende Element (7') größer ausgebildet ist als die anderen kraftübertragenden Elemente (7", 8', 8").

8. Vollauszugsführung nach einem der Ansprüche 1 bis 7, **dadurch gekennzeichnet, dass** die ersten kraftübertragenden Elemente (7, 7', 7") und die zweiten kraftübertragenden Elemente (8, 8', 8") als kugelförmige Wälzkörper ausgebildet sind und dass der vertikale minimale Abstand (a) zwischen der Korpusschiene (1) und der Mittelschiene (3) kleiner ist als ein Radius (r) des äußeren ersten kraftübertragenden Elementes (7').

9. Vollauszugsführung nach einem der Ansprüche 1 bis 8, **dadurch gekennzeichnet, dass** die horizontale Mittelebene (H1) des äußeren ersten kraftübertragenden Elementes (7') zwischen einer horizontalen Mittelebene (H2) des inneren zweiten kraftübertragenden Elementes (8") einerseits und der horizontalen Mittelebene (H3) des inneren ersten kraftübertragenden Elementes (7") und/oder der horizontalen Mittelebene (H4) des äußeren zweiten kraftübertragenden Elementes (8') angeordnet ist.

10. Vollauszugsführung nach einem der Ansprüche 1 bis 9, **dadurch gekennzeichnet, dass** das äußere erste kraftübertragende Element (7'), das äußere zweite kraftübertragende Element (8'), die auf der einen Seite der vertikalen Mittelebene (M) angeordnet sind, mit einem inneren zweiten kraftübertragenden Element (8"), das auf der anderen Seite der vertikalen Mittelebene (M) angeordnet ist, eine Verbindungslinie (S) bilden, die einen spitzen Winkel (a) zu der vertikalen Mittelebene (M) einschließt.

11. Vollauszugsführung nach einem der Ansprüche 1 bis 10, **dadurch gekennzeichnet, dass** die Korpusschiene (1) und die Mittelschiene (3) und die Laufschiene (4) als ein Profil bestehend aus einem umgeformten Blechmaterial ausgebildet sind.

12. Vollauszugsführung nach einem der Ansprüche 1 bis 11, **dadurch gekennzeichnet, dass** die Korpusschiene (1) als ein Hohlprofil ausgebildet ist.

## Claims

1. A full pull-out guide for furniture parts, in particular for drawers,
- having a body rail (1) that is attachable to a stationary furniture part,
- having a running rail (4) that is attachable to a movable furniture part,
- having a middle rail (3),
- having an inner running path (9) arranged between the body rail (1) and the middle rail (3), on which a series of first force-transferring elements (7, 7', 7") are movably arranged,
- having an outer running path (10) arranged between the middle rail (3) and the running rail (4), on which a series of second force-transferring elements (8, 8', 8") are movably arranged,
such that on at least one side of a vertical middle plane (M) of the full pull-out guide an outer first force-transferring element (7') is arranged in a vertical middle plane (V1, V1'), which extends between a vertical middle plane (V2, V2') of an inner first force-transferring element (7"), which is arranged on the same side of the vertical middle plane (M) as the outer first force-transferring element (7') and/or between an inner second force-transferring element (8"), which is arranged on the same side of the vertical middle plane (M) as the outer first force-transferring element (7') on the one hand, and a vertical middle plane (V3, V3') of an outer second force-transferring element (8'), which is arranged on the same side of the vertical middle plane (M) as the outer first force-transferring element (7') on the other hand, and
such that the first force-transferring elements (7, 7', 7") and the second force-transferring elements (8, 8', 8") do not intersect the vertical middle plane (M) of the full pull-out guide.

2. The full pull-out guide according to Claim 1, **characterised in that** the first force-transferring elements (7, 7', 7") and the second force-transferring elements (8, 8', 8") are arranged in pairs, wherein the first force-transferring elements (7, 7', 7") and the second force-transferring elements (8, 8', 8") of the pairs are arranged symmetrically to the vertical middle plane (M) of the full pull-out guide.

3. The full pull-out guide according to Claim 1 or 2, **characterised in that** the outer first force-transferring element (7') is arranged in a laterally projecting region of the inner running path (9).

4. The full pull-out guide according to any one of Claims 1 to 3, **characterised in that** the body rail (1), the middle rail (3) and the running rail (4) are profiled such that the first force-transferring elements (7, 7', 7") and second force-transferring elements (8, 8', 8") arranged on the respective sides with respect to the vertical middle plane (M) of the full pull-out guide are arranged in the circumferential direction (U) of the full pull-out guide in an alternating manner in the inner running path (9) and the outer running path (10).

5. The full pull-out guide according to any one of Claims 1 to 4, **characterised in that** the first force-transferring elements (7, 7', 7") arranged in the inner running path (9) and the second force-transferring elements (8, 8', 8") arranged in the outer running path (10) are each arranged with respect to one another in a different vertical plane (V1, V1', V2, V2', V3, V3') and/or horizontal plane (H1, H2, H3, H4).

6. The full pull-out guide according to any one of Claims 1 to 5, **characterised in that** a horizontal middle plane (H1) of the outer first force-transferring elements (7') is arranged vertically downwards offset from an upper side (13) of the body rail (1) such that a minimum vertical distance (a) between the body rail (1) and the middle rail (3) is smaller than 1.5 mm.

7. The full pull-out guide according to any one of Claims 1 to 6, **characterised in that** the outer first force-transferring element (7') is configured larger than the other force-transferring elements (7", 8', 8").

8. The full pull-out guide according to any one of Claims 1 to 7, **characterised in that** the first force-transferring elements (7, 7', 7") and the second force-transferring elements (8, 8', 8") are configured as spherical rolling elements and **in that** the vertical minimum distance (a) between the body rail (1) and the middle rail (3) is smaller than a radius (r) of the outer force-transferring element (7').

9. The full pull-out guide according to any one of Claims 1 to 8, **characterised in that** the horizontal middle plane (H1) of the outer first force-transferring element (7') is arranged between a horizontal middle plane (H2) of the inner second force-transferring element (8") on the one hand, and the horizontal middle plane (H3) of the inner first force-transferring element (7") and/or the horizontal middle plane (H4) of the outer second force-transferring element (8').

10. The full pull-out guide according to any one of Claims 1 to 9, **characterised in that** the outer first force-transferring element (7') and the outer second force-transferring element (8'), which are arranged on the one side of the vertical middle plane (M), form a connecting line (S) with an inner second force-transferring element (8") which is arranged on the other side of the vertical middle plane (M), said connecting line enclosing an acute angle (α) to the vertical middle plane (M).

11. The full pull-out guide according to any one of Claims 1 to 10,
**characterised in that** the body rail (1) and the middle rail (3) and the running rail (4) are configured as a profile consisting of a formed sheet material.

12. The full pull-out guide according to any one of Claims 1 to 11,
**characterised in that** the body rail (1) is configured as a hollow profile.

## Revendications

1. Glissière d'extraction complète pour éléments de meubles, en particulier pour des tiroirs,
- avec un rail de corps (1), qui peut être fixé sur un élément de meuble fixe,
- avec un rail de guidage (4), qui peut être fixé sur un élément de meuble déplaçable,
- avec un rail central (3),
- avec une glissière intérieure (9), disposée entre le rail de corps (1) et le rail central (3), sur laquelle sont disposés plusieurs premiers éléments de transmission de force mobiles (7, 7', 7"),
- avec une glissière extérieure (10), disposée entre le rail central (3) et le rail de guidage (4), sur laquelle sont disposés plusieurs éléments de transmission de force mobiles (8, 8', 8"), sachant que, sur au moins un côté d'un plan médian vertical (M) de la glissière d'extraction complète, un premier élément de transmission de force extérieur (7') est disposé sur un plan médian vertical (V1, V1'), qui est situé entre un plan médian vertical (V2, V2') d'un premier élément de transmission de force intérieur (7"), disposé sur le même côté du plan médian vertical (M) que le premier élément de transmission de force extérieur (7') et / ou, d'autre part, d'un deuxième élément de transmission de force intérieur (8"), qui est disposé sur le même côté du plan médian vertical (M) que le premier élément de transmission de force extérieur (7'), d'une part, et sur un plan médian vertical (V3, V3') d'un deuxième deuxièmes élément de transmission de force extérieur (8'), qui s'étend est disposé sur le même côté du plan médian vertical (M) que le premier élément de transmission de force extérieur (7'), d'autre part, et que les premiers éléments de transmission de force (7, 7', 7") et les deuxièmes éléments de transmission de force (8, 8', 8") n coupent pas le plan médian vertical (M) de la glissière d'extraction complète.

2. Glissière d'extraction complète selon la revendication 1, **caractérisée en ce que** les premiers éléments de transmission de force (7, 7', 7") et les deuxièmes éléments de transmission de force (8, 8', 8") sont disposés par couples, sachant que les premiers éléments de transmission de force (7, 7', 7") et les deuxièmes éléments de transmission de force (8, 8', 8") des couples sont disposés symétriquement par rapport au plan médian vertical (M) de la glissière d'extraction complète.

3. Glissière d'extraction complète selon revendication 1 ou 2, **caractérisée en ce que** le premier élément de transmission de force extérieur (7') est disposé dans une section de la glissière intérieure (9), qui est en saillie latéralement.

4. Glissière d'extraction complète selon l'une des revendications 1 à 3, **caractérisée en ce que** le rail de corps (1), le rail central (3) et le rail de guidage (4) sont profilés de manière à ce que les premiers éléments de transmission de force (7, 7', 7") et les deuxièmes éléments de transmission de force (8, 8', 8") associés aux côtés respectifs, quant au plan médian vertical (M) de la glissière d'extraction complète, sont disposés dans la direction périphérique (U) de la glissière d'extraction complète, alternativement dans la glissière intérieure (9) et la glissière extérieure (10).

5. Glissière d'extraction complète selon l'une des revendications 1 à 4, **caractérisée en ce que** les premiers éléments de transmission de force (7, 7', 7"), disposés dans la glissière intérieure (9), et les deuxièmes éléments de transmission de force (8, 8', 8"), disposés dans la glissière extérieure (10), sont disposés alternativement les uns par rapport aux autres sur un plan vertical (V1, V1', V2, V2', V3, V3') et / ou un plan horizontal (H1, H2, H3, H4) différents.

6. Glissière d'extraction complète selon l'une des revendications 1 à 5, **caractérisée en ce qu'**un plan médian, horizontal (H1) des premiers éléments de transmission de force extérieurs (7') est disposé verticalement, décalé, vers le bas par rapport à une face supérieure (13) du rail de corps (1), de manière à ce qu'un intervalle vertical minimal (a), entre le rail de corps (1) et le rail central (3) soit inférieur à 1,5 mm.

7. Glissière d'extraction complète selon l'une des revendications 1 à 6, **caractérisée en ce que** le premier élément de transmission de force extérieur (7') est plus grand que les autres éléments de transmission de force (7", 8', 8").

8. Glissière d'extraction complète selon l'une des revendications 1 à 7, **caractérisée en ce que** les premiers éléments de transmission de force (7, 7', 7") et les deuxièmes éléments de transmission de force (8, 8', 8") sont réalisés en tant que corps de roulement en forme de billes et que l'intervalle vertical minimal (a) entre le rail de corps (1) et le rail central (3) est plus petit que le rayon (r) du premier élément de transmission de force extérieur (7').

9. Glissière d'extraction complète selon l'une des revendications 1 à 8, **caractérisée en ce que** le plan médian, horizontal (H1) du premier élément de transmission de force extérieur (7') est situé, d'une part, entre un plan médian, horizontal (H2) du deuxième élément de transmission de force intérieur (8") et du plan médian, horizontal (H3) du premier élément de transmission de force intérieur (7") et / ou du plan médian, horizontal (H4) du deuxième élément de transmission de force extérieur (8'), d'autre part.

10. Glissière d'extraction complète selon l'une des revendications 1 à 9, **caractérisée en ce que** le premier élément de transmission de force extérieur (7'), le deuxième élément de transmission de force extérieur (8'), qui sont disposés sur l'un des côtés du plan médian vertical (M), forment avec un deuxième élément de transmission de force intérieur (8"), qui est disposé sur l'autre côté du plan médian vertical (M), une ligne de liaison (S), qui embrasse un angle aigu (α) par rapport au plan médian vertical (M).

11. Glissière d'extraction complète selon l'une des revendications 1 à 10, **caractérisée en ce que** le rail de corps (1) et le rail central (3) et le rail de guidage(4) sont réalisé sous la forme d'un profilé qui consiste en tôle façonnée.

12. Glissière d'extraction complète selon l'une des revendications 1 à 11, **caractérisée en ce que** le rail de corps (1) est réalisé sous la forme d'un profilé creux.
